# EUROPEAN PATENT APPLICATION

(11) **EP 4 369 034 A1**
(43) Date of publication of application: **15.05.2024**
(21) Application number: 22837487.2
(22) Date of filing: 23.06.2022
(51) Int. Cl.: G01S 7/524, G01S 15/931

(54) **OBJECT DETECTION DEVICE**

(30) Priority: 06.07.2021 JP 2021112069
(71) Applicant: AISIN CORPORATION, Kariya-shi, Aichi 448-8650 (JP)
(72) Inventor: SUGAE, Ippei, Kariya-shi, Aichi 448-8650 (JP)
(74) Representative: TBK
(86) International application number: PCT/JP2022/025024
(87) International publication number: WO 2023/282070

(57) **Abstract**

An object detection device is mounted on a moving body and detects an object that exists around the moving body. An object detection device includes a transmitter that transmits a transmission wave, a receiver that receives a reception wave generated by the transmission wave being reflected by the object, a mode setting unit that switches, in accordance with a predetermined condition, a plurality of distance modes including a short distance mode targeting a short distance range determined in advance, and a controller that sets a driving time of the transmission wave in the short distance mode to be shorter than the driving time of the transmission wave in another distance mode targeting a range farther than the short distance range.

## Description

### TECHNICAL FIELD

The present disclosure relates to an object detection device.

### BACKGROUND ART

In a vehicle control system and the like, there is used an object detection device that detects an object that exists around a vehicle by transmitting a transmission wave such as an ultrasonic wave from the vehicle and receiving a reception wave (reflected wave) generated by the transmission wave being reflected by the object. In addition, in such an object detection device, a technique of switching a plurality of distance modes in accordance with a situation is used. For example, there is a technique of reducing an amplification factor of a reception wave in a short distance mode for detecting an object at a short distance (Patent Literature 1).

### CITATIONS LIST

### PATENT LITERATURE

Patent Literature 1: JP H10-213658 A

### SUMMARY OF INVENTION

### TECHNICAL PROBLEMS

One of the problems to be solved by the present disclosure is to provide an object detection device capable of switching a distance mode appropriately and easily.

### SOLUTIONS TO PROBLEMS

An object detection device as an example of the present disclosure is mounted on a moving body and detects an object that exists around the moving body, the object detection device including a transmitter that transmits a transmission wave, a receiver that receives a reception wave generated by the transmission wave being reflected by the object, a mode setting unit that switches, in accordance with a predetermined condition, a plurality of distance modes including a short distance mode targeting a short distance range determined in advance, and a controller that sets a driving time of the transmission wave in the short distance mode to be shorter than the driving time of the transmission wave in another distance mode targeting a range farther than the short distance range.

The configuration described above enables switching of the distance mode according to a situation to be implemented appropriately and easily.

The controller may set a number of pulses of the transmission wave in the short distance mode to be smaller than a number of pulses of the transmission wave in another distance mode targeting a range farther than the short distance range.

As a result, the switching of the distance mode can be implemented by relatively simple control of the number of pulses.

The mode setting unit may execute the short distance mode when the moving body shifts from a stopped state to a driving state.

As a result, it is possible to reduce the possibility of failing to detect the object (obstacle) existing near the moving body when shifting from the stopped state to the driving state.

The mode setting unit may switch the short distance mode to another distance mode targeting a distance range farther than the short distance range in a case where the object is not detected in the short distance mode.

This makes it possible to gradually widen the range to be targeted in a case where there is no object at a short distance.

The mode setting unit may execute the short distance mode during execution of steering control for automatically controlling a steering mechanism of the moving body.

It is therefore possible to improve the detection accuracy at a short distance at the time of steering control and to execute the steering control efficiently.

The steering control may be control executed in parking assistance processing of automatically parking the moving body in a parking area.

As a result, the parking assistance processing can be efficiently executed.

The steering control may be control executed when the moving body is moved toward the parking area after the parking area is detected.

As a result, the control for moving the moving body to the narrow parking area can be efficiently executed.

### BRIEF DESCRIPTION OF DRAWINGS

FIG. 1 is a top view illustrating an example of a configuration of a vehicle according to an embodiment.
FIG. 2 is a block diagram illustrating an example of a hardware configuration of a vehicle control system according to an embodiment.
FIG. 3 is a diagram illustrating an example of a method of calculating a distance by a TOF method.
FIG. 4 is a block diagram illustrating an example of a functional configuration of an object detection device according to an embodiment.
FIG. 5 is a diagram illustrating an example of the number of pulses, a driving time, and a reverberation time in a short distance mode, and the number of pulses, a driving time, and a reverberation time in another distance mode according to an embodiment.
FIG. 6 is a flowchart illustrating an example of processing related to setting of the short distance mode in the object detection device according to an embodiment.
FIG. 7 is a diagram illustrating an example of a situation when a parking area is detected in parking assistance processing according to an embodiment.
FIG. 8 is a diagram illustrating an example of a situation when a vehicle is moved toward the parking area detected in the parking assistance processing according to an embodiment.

### DESCRIPTION OF EMBODIMENTS

Hereinafter, embodiments of the present disclosure will be described with reference to the drawings. The configurations of the embodiments described below and the functions and effects brought about by the configurations are merely examples, and the present invention is not limited to the following description.

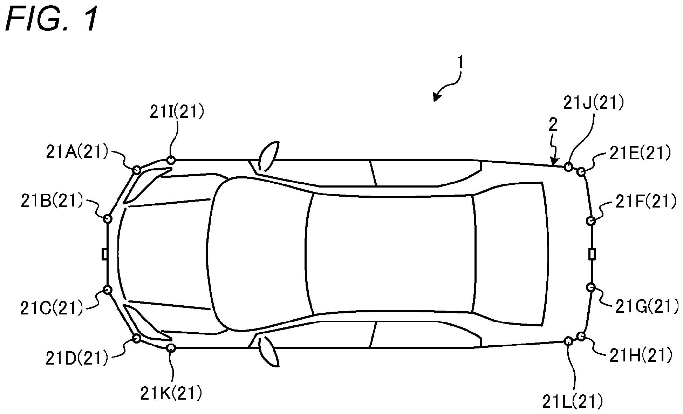

FIG. 1 is a top view illustrating an example of a configuration of a vehicle 1 according to an embodiment. The vehicle 1 is an example of a moving body on which an object detection device according to the present embodiment is mounted. The object detection device according to the present embodiment is a device that detects an object that exists around the vehicle 1 on the basis of information such as a time of flight (TOF) and a Doppler shift acquired by transmitting a transmission wave from the vehicle 1 and receiving a reception wave (reflected wave) generated by the transmission wave being reflected by the object.

The object detection device according to the present embodiment includes a plurality of transceivers 21A to 21L (which will be abbreviated as a transceiver 21 in a case where it is not necessary to distinguish the plurality of transceivers 21A to 21L.). Each of the transceivers 21 is installed in a vehicle body 2 as an exterior of the vehicle 1, transmits an ultrasonic wave (an example of a transmission wave) toward the outside of the vehicle body 2, and receives a reflected wave from an object existing outside the vehicle body 2 as a reception wave. In the example illustrated in FIG. 1, four transceivers 21A to 21D are arranged at a front end of the vehicle body 2, four transceivers 21E to 21H are arranged at a rear end, two transceivers 211 and 21J are arranged on a right side face, and two transceivers 21K and 21L are arranged on a left side face. Note that the number and installation positions of the transceivers 21 are not limited to this example.

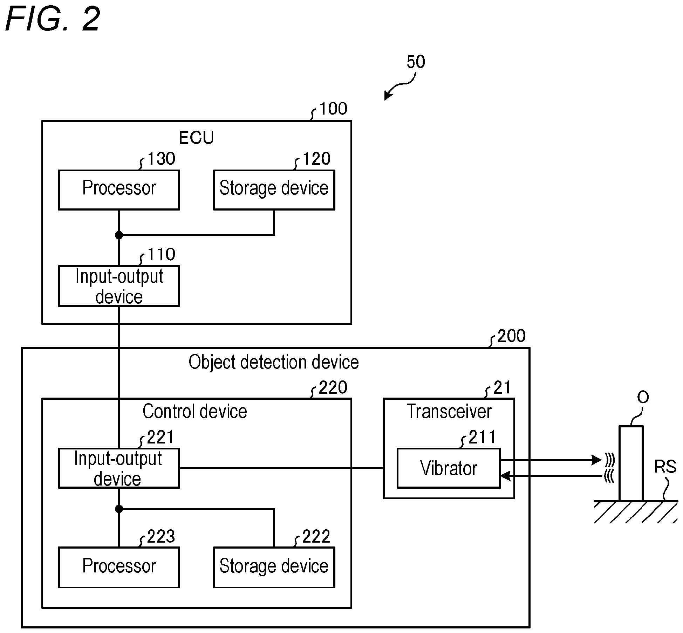

FIG. 2 is a block diagram illustrating an example of a hardware configuration of a vehicle control system 50 according to an embodiment. The vehicle control system 50 performs processing for controlling the vehicle 1 on the basis of information output from an object detection device 200. The vehicle control system 50 according to the present embodiment includes an ECU 100 and the object detection device 200.

The object detection device 200 includes the plurality of transceivers 21 and a control device 220. Each of the transceivers 21 includes a vibrator 211 configured by using a piezoelectric element or the like, an amplifier, and the like, and achieves transmission and reception of an ultrasonic wave by vibration of a vibrator 211. Specifically, each transceiver 21 transmits, as a transmission wave, an ultrasonic wave generated in response to the vibration of the vibrator 211, and detects the vibration of the vibrator 211 caused by a reflected wave (reception wave) of the transmission wave reflected by an object such as an obstacle O and a road surface RS. The vibration of the vibrator 211 is converted into an electric signal, and the TOF corresponding to a distance from the transceiver 21 to the obstacle O, Doppler shift information corresponding to a relative speed of the obstacle O, and the like can be acquired on the basis of the electric signal.

Note that, in the example illustrated in FIG. 2, a configuration in which both the transmission of the transmission wave and the reception of the reception wave are performed by using a single vibrator 211 is illustrated, but the configuration of the transceiver 21 is not limited to this configuration. For example, like a configuration in which a vibrator for transmitting a transmission wave and a vibrator for receiving a reception wave are separately provided, a transmission side and a reception side may be separated.

The control device 220 includes an input-output device 221, a storage device 222, and a processor 223. The input-output device 221 is an interface device that enables transmission and reception of information between the control device 220 and the outside (the transceiver 21, the ECU 100, and the like). The storage device 222 includes a main storage device such as a read only memory (ROM) and a random access memory (RAM), and an auxiliary storage device such as a hard disk drive (HDD) and a solid state drive (SSD). The processor 223 is an integrated circuit that executes various processing for implementing the functions of the control device 220, and can be configured by using, for example, a central processing unit (CPU) that operates in accordance with a program, an application specific integrated circuit (ASIC) designed for a specific application, or the like. The processor 223 executes various calculation processing and control processing by reading and executing a program stored in the storage device 222.

The ECU 100 is a unit that executes various processing for controlling the vehicle 1 on the basis of various types of information acquired from the object detection device 200 and the like. The ECU 100 includes an input-output device 110, a storage device 120, and a processor 130. The input-output device 110 is an interface device that enables transmission and reception of information between the ECU 100 and an external mechanism (the object detection device 200, a drive mechanism, a braking mechanism, a steering mechanism, a transmission mechanism, an in-vehicle display, a speaker, various sensors, and the like). The storage device 120 includes a main storage device such as a ROM and a RAM, and an auxiliary storage device such as an HDD and an SSD. The processor 130 is an integrated circuit that executes various processing for implementing the functions of the ECU 100, and can be configured by using, for example, a CPU, an ASIC, or the like. The processor 130 reads a program stored in the storage device 120 and executes various calculation processing and control processing.

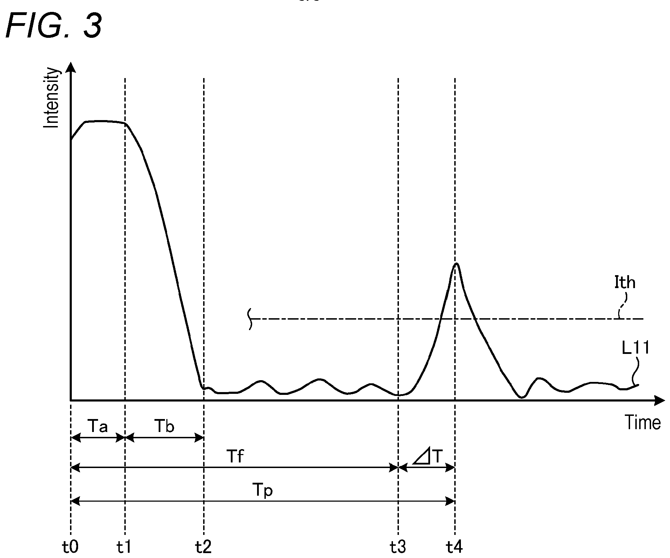

FIG. 3 is a diagram illustrating an example of a method of calculating a distance by a TOF method. FIG. 3 illustrates an envelope L11 (the echo information) indicating a temporal change in intensity (signal level) of the ultrasonic wave transmitted and received by the transceiver 210. In the graph illustrated in FIG. 3, the horizontal axis corresponds to time (TOF), and the vertical axis corresponds to the intensity of ultrasonic waves transmitted and received by the transceiver 210 (a magnitude of the vibration of the vibrator 211).

The envelope L11 indicates a temporal change in intensity indicating the magnitude of the vibration of the vibrator 211. From the envelope L11 illustrated in FIG. 3, it can be understood that the vibrator 211 is driven from timing t0 by time Ta and vibrates, so that the vibration of the vibrator 211 due to inertia continues while being attenuated during time Tb until the transmission of the transmission wave is completed at timing t1 and then reaches timing t2. Therefore, in the graph illustrated in FIG. 3, time Tb corresponds to a so-called reverberation time.

The envelope L11 reaches a peak at which the magnitude of the vibration of the vibrator 211 becomes equal to or greater than a detection threshold value Ith at timing t4 after a lapse of time Tp from timing t0 at which the transmission of the transmission wave is started. The detection threshold value Ith is a value set to identify whether the vibration of the vibrator 211 is caused by reception of the reception wave from the obstacle O (another vehicle, structure, pedestrian, or the like) or by reception of a reception wave from an object other than the obstacle O (for example, the road surface RS). Here, the detection threshold value Ith is illustrated as a constant value, but the detection threshold value Ith may be a variation value that changes in accordance with a situation. Vibration having a peak equal to or greater than the detection threshold value Ith can be regarded as being caused by reception of the reception wave from the obstacle O.

The envelope L11 in this example indicates that the vibration of the vibrator 211 is attenuated after timing t4. Therefore, timing t4 corresponds to a timing at which the reception of the reception wave from the obstacle O is completed, in other words, a timing at which the transmission wave transmitted last at timing t1 returns as a reception wave.

In the envelope L11, timing t3 as a start point of the peak at timing t4 corresponds to a timing at which reception of the reception wave from the obstacle O starts, in other words, a timing at which the transmission wave first transmitted at timing t0 returns as a reception wave. Therefore, time ΔT between timing t3 and timing t4 is equal to time Ta as a driving time of the transmission wave.

From the above, in order to obtain the distance from a transmission-reception source of the ultrasonic wave to the obstacle O by using the TOF, it is necessary to obtain time Tf between timing t0 at which the transmission wave starts to be transmitted and timing t3 at which the reception wave starts to be received. Time Tf can be obtained by subtracting time ΔT equal to time Ta as the driving time of the transmission wave from time Tp as a difference between timing t0 and timing t4 at which the intensity of the reception wave reaches a peak exceeding the detection threshold value Ith.

Timing t0 at which the transmission wave starts to be transmitted can be easily specified as a timing at which the object detection device 200 starts an operation, and time Ta as the driving time of the transmission wave is determined in advance by setting or the like. Therefore, the distance from the transmission-reception source to the obstacle O can be obtained by specifying timing t4 at which the intensity of the reception wave reaches a peak equal to or greater than the detection threshold value Ith.

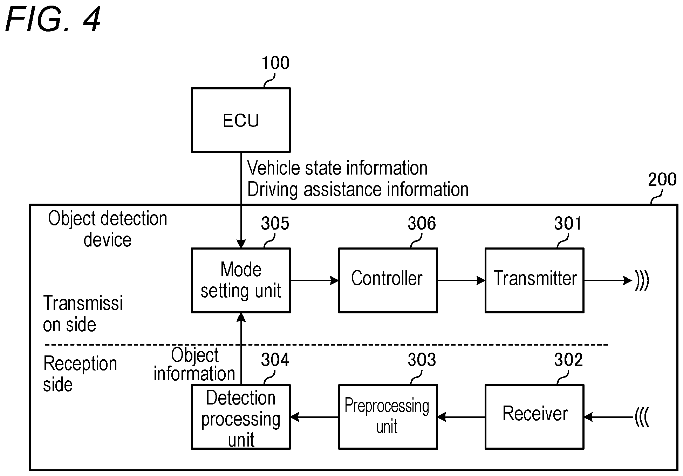

FIG. 4 is a block diagram illustrating an example of a functional configuration of the object detection device 200 according to an embodiment. The object detection device 200 according to the present embodiment includes a transmitter 301, a receiver 302, a preprocessing unit 303, a detection processing unit 304, a mode setting unit 305, and a controller 306. These functional components 301 to 306 can be implemented, for example, by cooperation of hardware components of the object detection device 200 illustrated in FIG. 2 and software components such as firmware and a program.

The transmitter 301 transmits a transmission wave to the outside by vibrating the vibrator 211 described above. In addition to the vibrator 211, the transmitter 301 can be configured by using, for example, a circuit that generates a carrier wave, a circuit that generates a pulse signal corresponding to identification information to be given to the carrier wave, a multiplier that modulates the carrier wave in accordance with the pulse signal, an amplifier that amplifies a transmission signal output from the multiplier, and the like.

The receiver 302 receives a reception wave generated when the transmission wave transmitted from the transmitter 301 is reflected by an object. The receiver 302 can be configured by using, for example, an AD converter or the like in addition to the vibrator 211.

The preprocessing unit 303 performs preprocessing of generating echo information (for example, an envelope illustrated in FIG. 3) indicating a temporal change in intensity of the reception wave. The preprocessing can include, for example, amplification processing of amplifying a reception signal corresponding to the reception wave, filtering processing of reducing noise included in the amplified reception signal, correlation processing of acquiring a correlation value indicating similarity between the transmission signal and the reception signal, and the like.

The detection processing unit 304 generates object information indicating a detection result of an object on the basis of the echo information or the like generated by the preprocessing unit 303. For example, the detection processing unit 304 generates the object information indicating the presence or absence of the obstacle O, the distance to the obstacle O, and the like on the basis of the TOF when the intensity on the envelope L11 as illustrated in FIG. 3 exceeds a predetermined threshold value (for example, the detection threshold value Ith).

The mode setting unit 305 switches a plurality of distance modes in accordance with the situation. The distance mode is determined for each target distance range. For example, a short distance mode targeting a predetermined short distance range, an intermediate distance mode targeting an intermediate distance range that is a range farther than the short distance range, a long distance mode targeting a long distance range that is a range farther than the intermediate distance range, and the like can be set as the distance mode. The mode setting unit 305 according to the present embodiment sets the distance mode on the basis of vehicle state information, driving assistance information, and the like acquired from the ECU 100 and the like. The vehicle state information can be information indicating a driving state (on/off of an ignition power supply, on/off of an accessory power supply, and the like), a traveling state (a vehicle speed, acceleration, deceleration, and the like), and the like of the vehicle 1. The driving assistance information is information related to processing for assisting driving of the vehicle 1. The driving assistance information can include, for example, information related to parking assistance processing for automatically (including semiautomatically) parking the vehicle 1 in a parking area, information related to steering control for automatically operating a steering mechanism such as a steering wheel, and the like.

The controller 306 changes the driving time of the transmission wave transmitted from the transmitter 301 in accordance with the distance mode set by the mode setting unit 305. The driving time is a time for outputting a transmission wave, and corresponds to, for example, time Ta in FIG. 3. The controller 306 according to the present embodiment sets the number of pulses of the transmission wave in the short distance mode to be smaller than the number of pulses of the transmission wave in another distance mode (for example, the intermediate distance mode, the long distance mode, or the like) targeting a range farther than the short distance range. The number of pulses here is the number of pulses of the transmission wave in one detection cycle, and is, for example, a value corresponding to the number of times of vibrating the vibrator 211 or the like. The smaller the number of pulses, the shorter the driving time and the reverberation time (time Tb in FIG. 3), the shorter the detection cycle (waiting time of the reception wave), and the easier it is to detect an object existing at a short distance.

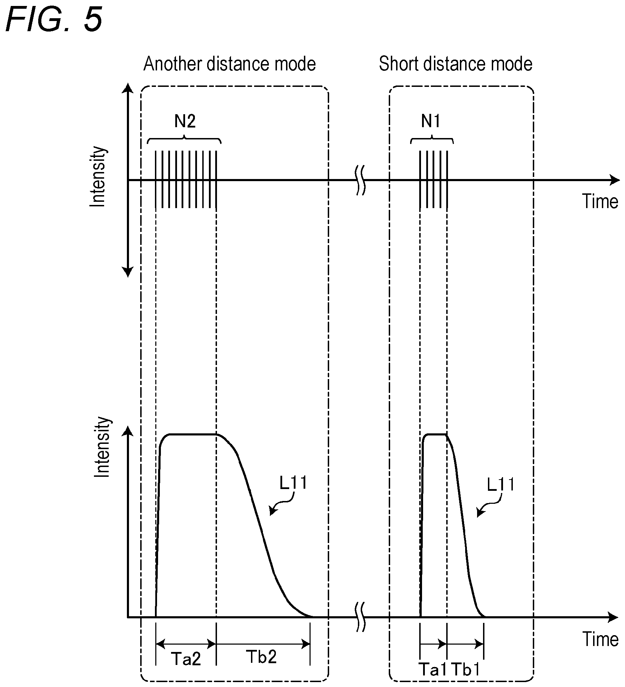

FIG. 5 is a diagram illustrating an example of a number N1 of pulses, a driving time Ta1, and a reverberation time Tb1 in a short distance mode, and a number N2 of pulses, a driving time Ta2, and a reverberation time Tb2 in another distance mode according to an embodiment. As illustrated in FIG. 5, when the number N1 of pulses of the transmission wave in the short distance mode becomes smaller than the number N2 of pulses of the transmission wave in another distance mode (for example, the intermediate distance mode, the long distance mode, or the like), the driving time Ta1 and the reverberation time Tb1 in the short distance mode become shorter than the driving time Ta2 and the reverberation time Tb2 in another distance mode. As a result, the detection cycle of the short distance mode becomes shorter than the detection cycle of another distance mode.

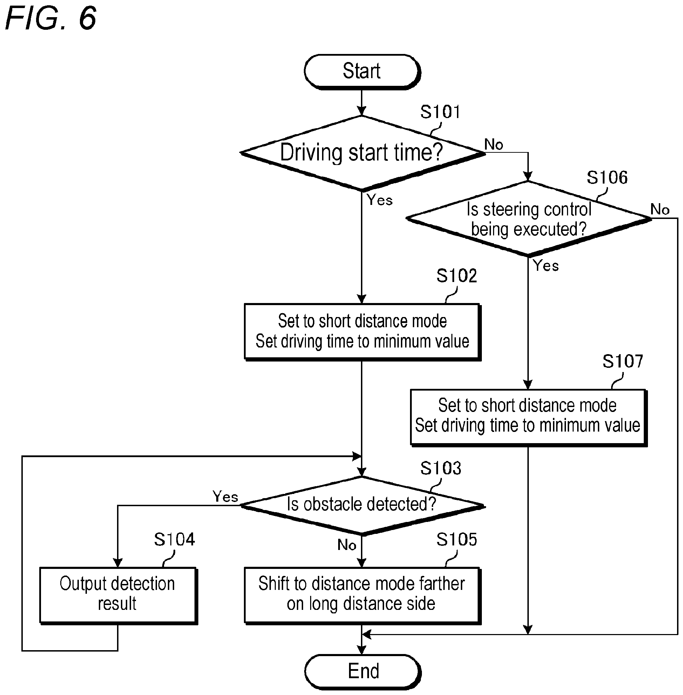

FIG. 6 is a flowchart illustrating an example of processing related to setting of the short distance mode in the object detection device 200 according to an embodiment. The mode setting unit 305 determines whether it is a driving start time when the vehicle 1 shifts from a stopped state to a driving state (S101). When it is the driving start time (S101: Yes), the mode setting unit 305 sets the distance mode to the short distance mode, and the controller 306 sets the driving time (for example, the number of pulses) of the transmission wave to a minimum value (S102). The minimum value is an example of a value smaller than the driving time of the transmission wave in another distance mode (for example, the intermediate distance mode, the long distance mode, or the like) targeting a range farther than the short distance mode.

Thereafter, the detection processing unit 304 determines whether the obstacle O has been detected on the basis of the echo information acquired in the short distance mode (S103). When the obstacle O is detected (S103: Yes), a detection result (object information) is output to the mode setting unit 305 and the ECU 100 (S104). Upon receiving the detection result (object information indicating that the obstacle O has been detected), the mode setting unit 305 continues the short distance mode. Thereafter, the detection processing unit 304 continues the detection of the obstacle O in the short distance mode (S103). On the other hand, when the obstacle O has not been detected (S103: No), the mode setting unit 305 shifts the distance mode from the short distance mode to a distance mode farther on a long distance side (for example, the intermediate distance mode or the like) (S105). Thereafter, this routine ends. After the end of this routine, another mode setting processing for switching the distance mode on the basis of another condition may be executed.

When it is not the driving start time (S101: No), the mode setting unit 305 determines whether the steering control is being executed (S106). As described above, the steering control is control for automatically operating the steering mechanism of the vehicle 1, and is, for example, control that can be executed during execution of the parking assistance processing. When the steering control is being executed (S106: Yes), the mode setting unit 305 sets the distance mode to the short distance mode, and the controller 306 sets the driving time of the transmission wave to a minimum value (S107). Thereafter, this routine ends. On the other hand, when the steering control is not being executed (S106: No), this routine ends.

Hereinafter, a case where the steering control in step S106 is control executed during execution of the parking assistance processing will be described.

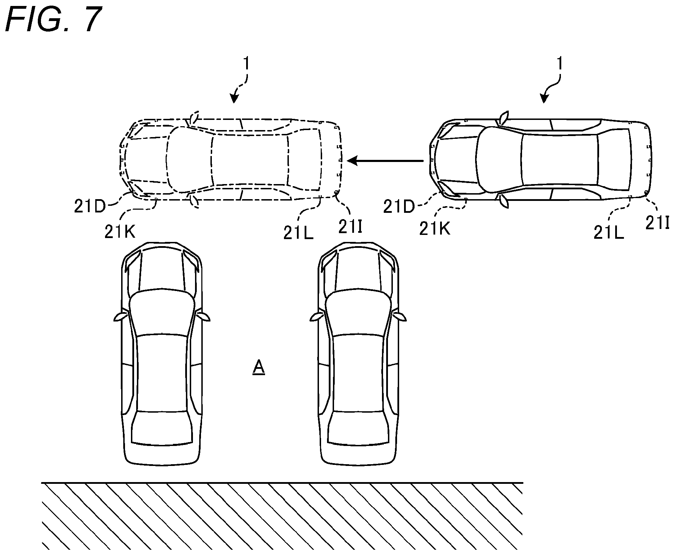

FIG. 7 is a diagram illustrating an example of a situation when a parking area A is detected in the parking assistance processing according to an embodiment. When the parking area A is detected in the parking assistance processing, as illustrated in FIG. 7, the vehicle 1 is slowly moved from a position around the solid line to a position around the alternate long and short dash line. At this time, a width of an entrance portion of the parking area A is detected from the echo information based on the ultrasonic wave transmitted and received by the transceivers 21D, 21K, 21L, and 21I mounted on the parking area A side of the vehicle 1. At this time, in order to recognize the shape of the parking area A as accurately as possible, the intermediate distance mode or the long distance mode may be used.

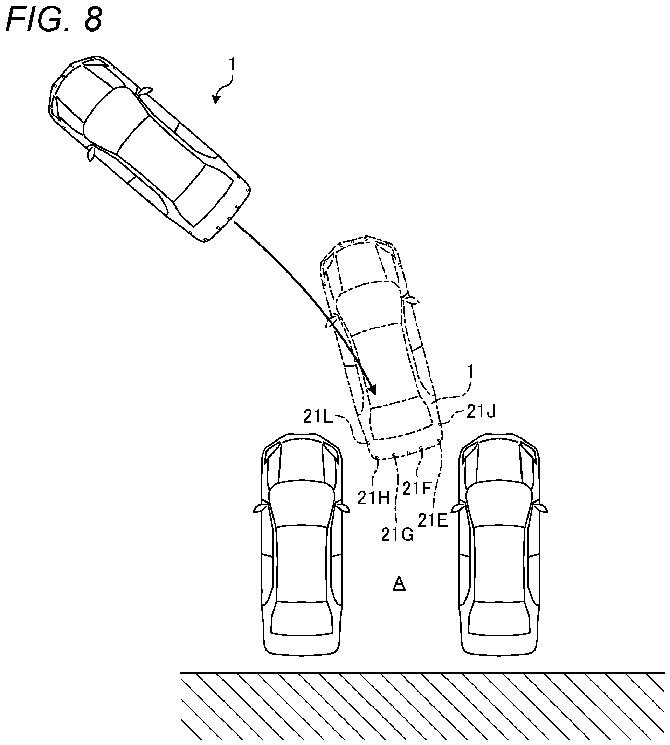

FIG. 8 is a diagram illustrating an example of a situation when the vehicle 1 is moved toward the parking area A detected in the parking assistance processing according to an embodiment. In the parking assistance processing, when the vehicle 1 is moved toward the parking area A after the detection of the parking area A, the steering control for automatically operating the steering mechanism is performed in some cases. In the present embodiment, the distance mode of the object detection device 200 is set to the short distance mode during the execution of the steering control under such a situation. As a result, in the example illustrated in FIG. 7, the detection accuracy at a short distance by the transceivers 21E to 21H, 211, and 21L set near the rear end of the vehicle 1 is improved, and the vehicle 1 can be efficiently moved to the narrow parking area A.

Note that, the situation in which the vehicle 1 is backed and parked in parallel has been illustrated above, but the situation in which the short distance mode is set is not limited to the situation described above. For example, the short distance mode may be set during execution of the steering control in a case where parallel parking is performed by moving the vehicle 1 forward or in a case where tandem parking is performed.

As described above, in the present embodiment, the switching of the distance mode according to the situation can be implemented by relatively simple control of the driving time of the transmission wave. In addition, since the object detection is performed in the short distance mode at the driving start time, it is possible to reduce the possibility of failing to detect the object (obstacle O) existing near the vehicle 1 at the driving start time. Since the object is detected in the short distance mode at the time of the steering control, the steering control can be efficiently executed.

A program for causing a computer (for example, the processor 223 of the control device 220, the processor 130 of the ECU 100, and the like) to execute processing for implementing various functions in the embodiments can be provided by being recorded in a computer-readable recording medium such as a compact disc (CD)-ROM, a flexible disk (FD), a CD-R (recordable), and a digital versatile disk (DVD) as a file in an installable format or an executable format. Alternatively, the program may be provided or distributed via a network such as the Internet.

Although the embodiments of the present disclosure have been described above, the embodiments and modifications of the embodiments are merely examples, and are not intended to limit the scope of the invention. The novel embodiments and modifications can be implemented in various forms, and various omissions, substitutions, and changes can be made without departing from the gist of the invention. The embodiments and modifications are included in the scope and gist of the invention, and are included in the invention described in the claims and the equivalent scope of the invention.

### REFERENCE SIGNS LIST

1: Vehicle, 2: Vehicle body, 21, 21A-21L: Transceiver, 50: Vehicle control system, 100: ECU, 110: Input-output device, 120: Storage device, 130: Processor, 200: Object detection device, 211: Vibrator, 220: Control device, 221: Input-output device, 222: Storage device, 223: Processor, 301: Transmitter, 302: Receiver, 303: Preprocessing unit, 304: Detection processing unit, 305: Mode setting unit, 306: Controller, and A: Parking area

## Claims

1. An object detection device that is mounted on a moving body and detects an object that exists around the moving body, the object detection device comprising:
a transmitter that transmits a transmission wave;
a receiver that receives a reception wave generated by the transmission wave being reflected by the object;
a mode setting unit that switches, in accordance with a predetermined condition, a plurality of distance modes including a short distance mode targeting a short distance range determined in advance; and
a controller that sets a driving time of the transmission wave in the short distance mode to be shorter than the driving time of the transmission wave in another distance mode targeting a range farther than the short distance range.

2. The object detection device according to claim 1, wherein
the controller sets a number of pulses of the transmission wave in the short distance mode to be smaller than a number of pulses of the transmission wave in another distance mode targeting a range farther than the short distance range.

3. The object detection device according to claim 1, wherein
the mode setting unit executes the short distance mode when the moving body shifts from a stopped state to a driving state.

4. The object detection device according to claim 3, wherein
the mode setting unit switches the short distance mode to another distance mode targeting a distance range farther than the short distance range in a case where the object is not detected in the short distance mode.

5. The object detection device according to claim 1, wherein
the mode setting unit executes the short distance mode during execution of steering control for automatically controlling a steering mechanism of the moving body.

6. The object detection device according to claim 5, wherein
the steering control is control executed in parking assistance processing of automatically parking the moving body in a parking area.

7. The object detection device according to claim 6, wherein
the steering control is control executed when the moving body is moved toward the parking area after the parking area is detected.
